# EUROPÄISCHE PATENTSCHRIFT

(11) **EP 1 864 695 B1**
(45) Veröffentlichungstag und Bekanntmachung des Hinweises auf die Patenterteilung: **30.12.2009**
(21) Anmeldenummer: 07007943.9
(22) Anmeldetag: 19.04.2007
(51) Int. Cl.: A62C 4/02, B23H 9/00, B23H 9/14

(54) **Flammensperranordnung und Verfahren zum Einbringen von Bohrungen in eine Flammensperranordnung**
Flame trap assembly and method for drilling bores to a flame trap assembly
Piège à flammes et procédé destiné à la réalisation de trous dans un dispositif de piège à flammes

(30) Priorität: 07.06.2006 DE 102006026779
(43) Veröffentlichungstag der Anmeldung: 12.12.2007
(73) Patentinhaber: Leinemann GmbH & Co. KG, 38110 Braunschweig (DE)
(72) Erfinder: Leinemann, Christoph, Dipl.-Ing., 38108 Braunschweig (DE)
(74) Vertreter: Lins, Edgar

(56) Entgegenhaltungen:
- US-A- 2 420 599
- US-A- 2 613 144

## Beschreibung

Die Erfindung betrifft ein Verfahren zum Einbringen von radial ausgerichteten Bohrungen für Fixierstifte in eine Flammensperranordnung, die aus zwei gemeinsam zu einer Scheibe mit einem etwa kreisförmigen Außenumfang gewickelten Metallbändern gebildet ist, von denen ein erstes Metallband ein glattes Band und das zweite Metallband ein eine definierte Riffelung aufweisendes Riffelband ist, wobei die beiden Bänder durch Aneinanderliegen definierte Spalte für einen Fluiddurchtritt bilden.

Die Erfindung betrifft ferner eine Flammensperranordnung, die aus zwei gemeinsam zu einer Scheibe mit einem etwa kreisförmigen Außenumfang gewickelten Metallbändern gebildet ist, von denen ein erstes Metallband ein glattes Band und das zweite Metallband ein eine definierte Riffelung aufweisendes Riffelband ist, wobei die beiden Bänder durch Aneinanderliegen definierte Spalte für einen Fluiddurchtritt bilden und durch in radiale Bohrungen eingesetzte Fixierstifte zueinander in Position gehalten werden.

Es sind seit langer Zeit Flammensperranordnungen bekannt, deren Fluiddurchtrittsspalte durch ein eine definierte Riffelung oder Wellung aufweisendes Riffelband in Verbindung mit einem das Riffelband beidseitig begrenzenden glatten Band gebildet werden. Die Herstellung derartiger Flammensperranordnungen gelingt dadurch, dass das glatte Band zusammen mit dem Riffelband gemeinsam spiralförmig aufgewickelt wird.

Die für die Erstellung des Flammensperreinsatzes verwendeten Metallbänder müssen aus hochwarmfesten Edelstahl bestehen, nicht nur um die notwendige Temperaturbeständigkeit zu haben, sondern um auch für aggressive Medien widerstandsfähig zu sein, d.h. nicht zu korrodieren. Korrosionserscheinungen würden die definierten Fluiddurchtrittsspalte verändern und so ggf. ein Sicherheitsrisiko darstellen.

Die mechanische Festigkeit von Flammensperren hängt vor allem vom Reibungswert der Metallbänder an den Kontaktstellen ab.

Die verwendeten korrosionsbeständigen Materialien zeichnen sich regelmäßig durch eine sehr glatte, d.h. polierte, Oberfläche aus, sodass die Stabilität einer Flammensperre der hier in Frage stehenden Art, insbesondere bei größeren Durchmessern, aufgrund des relativ geringen Reibungswerts, ein Problem darstellen kann. Ggf. müssen besondere Vorrichtungen beschaffen werden, um die gewickelten Flammensperreinsätze in ein Gehäuse einbauen zu können, in dem die Einsätze stabil gehalten werden. Es ist bereits versucht worden, durch axial aufgelötete Verstärkungen die Stabilität der Flammensperreinsätze zu erhöhen. Hierdurch wird jedoch nicht nur der Aufwand höher, sondern auch die Handhabung sowohl bei der Herstellung als auch beim Warten der Flammensperren umständlicher.

Es ist z.B. aus US 2 613 144 und US 242 0 599 bekannt, in derartige Flammensperranordnungen von außen radiale Bohrungen einzubringen, die bis zu einem Wickelkern der Flammensperranordnung reichen können. Durch Einsetzen von Fixierstiften in diese Bohrungen wird eine radiale formschlüssige Verbindung zwischen den Bindungen der gewickelten Flammensperranordnung hergestellt. Je nach Größe der gewickelten Scheibe werden üblicherweise zwischen vier und acht Bohrungen mit Fixierstiften vorgesehen. Selbstverständlich ist es auch möglich, die Bohrungen durch den gesamten Durchmesser der Flammensperranordnung hindurchzutreiben.

Auch beim vorsichtigen Eindringen der radialen Bohrungen in die Flammensperranordnung mittels eines Bohrers werden die Metallbänder im Bereich der Bohrungen verformt, sodass die Durchtrittsspalte der Flammensperranordnung im Bereich der radial eingebrachten Bohrungen bzw. der Fixierstifte verformt sind. Dadurch werden die vorgeschriebenen maximalen Nennweiten der Bohrungen nicht mehr sicher eingehalten, da die Verformungen unkontrolliert sind und daher zu Vergrößerungen der Spaltquerschnitte führen können. Durch einen vergrößerten Spaltquerschnitt kann es jedoch zu einem Flammendurchschlag durch die Flammensperre kommen, weil in dem vergrößerten Spaltquerschnitt keine ausreichende Abkühlung eines durchtretenden brennenden Gases mehr erfolgt, sodass die Flamme nicht sicher gelöscht wird.

Die Verwendung der bekannten Flammensperranordnung, die durch in Bohrungen eingesetzte Fixierstifte zusammengehalten wird, ist daher zumindest für kritische Anwendungen beispielsweise bei hochexplosiblen Gasen nicht mit der erforderlichen Produktsicherheit möglich.

Es sind daher andere Wege beschritten worden, Flammensperranordnungen zu stabilisieren, beispielsweise durch die Anbringung von aufgelöteten Verstärkungselementen o. ä.. Hierdurch wird der Aufwand - und damit der Preis - für die Flammensperranordnung jedoch erheblich erhöht.

Der Erfindung liegt daher die Aufgabe zugrunde, eine formschlüssige Fixierung der Windungen einer gewickelten Flammensperranordnung zu ermöglichen, ohne Risiken für die Ausbildung der definierten Durchtrittsspalte eingehen zu müssen.

Diese Aufgabe wird erfindungsgemäß mit einem Verfahren der eingangs erwähnten Art dadurch gelöst, dass die gewickelte Flammensperranordnung beidseitig axial vollständig mit Halteplatten abgeschlossen wird und dass vom Außenumfang radial nach innen mit einer Funkenerosionselektrode unter Eindrücken einer Kühlflüssigkeit die Bohrung eingebracht wird.

Demgemäß wird die genannte Aufgabe mit einer Flammensperranordnung der eingangs erwähnten Art erfindungsgemäß dadurch gelöst, dass die Bohrungen durch Funkenerosion ohne Verformung der in das zweite Metallband eingeformten Riffelung eingebracht sind, sodass die Spalte auch im Bereich der Bohrungen in der durch die eingeformte Riffelung definierten Weise vorhanden sind.

Die vorliegende Erfindung beruht auf der Erkenntnis, dass durch Funkenerosion die sich zu einer Bohrung ergänzenden Löcher auch in die dünnen Metallbänder eingebracht werden können, ohne die Metallbänder im Bereich der hergestellten Löcher zu verformen. Erfindungsgemäß ist daher vorgesehen, die für die Funkenerosion erforderliche Flüssigkeit, die zum Kühlen der Metallbänder und zum Abtransportieren des für die Bohrung erodierten Materials dient, in die axial offene Flammensperranordnung eingebracht werden kann, wenn die gewickelte Flammensperranordnung beidseitig axial vollständig mit Halteplatten abgeschlossen wird. Dadurch wird erreicht, dass sich im Bereich der hergestellten Bohrung ein geschlossener Flüssigkeitskreislauf ausbildet und die Flüssigkeit nicht undefiniert durch die axial offenen Spalte austritt.

Dies ist die wesentliche verfahrenstechnische Voraussetzung dafür, das an sich nur für massive Materialien vorgesehene Funkenerosionsbohren nun erfindungsgemäß auch bei einer mit definierten Zwischenräumen gewickelten Flammensperranordnung anzuwenden.

Erfindungsgemäß wird dabei eine Flammensperranordnung realisiert, deren Bohrungen die durch die Riffelung definierten Spalte nicht verändert, sodass die Fixierstifte zur formschlüssigen Verbindung der Bindungen der gewickelten Flammensperranordnung eingebracht werden können, ohne dass die Gefahr besteht, dass die kritischen Flammenspaltmaße verändert worden sind.

Die erfindungsgemäße Flammensperranordnung ist vorzugsweise spiralförmig gewickelt. Grundsätzlich ist es jedoch auch möglich, die erfindungsgemäße Verstiftung der Wicklung auch einer Vielzahl von parallel gewickelten Metallbändern vorzusehen.

Die Erfindung soll im Folgenden anhand der beigefügten Zeichnung erläutert werden. Es zeigen:
- Figur 1 -: eine schematische Darstellung einer gewickelten Flammensperranordnung zwischen zwei Halteplatten beim Einbringen einer Bohrung mittels einer Funkenerosionselektrode;
- Figur 2 -: ein vergrößertes Detail X aus Figur 1;
- Figur 3 -: einen Querschnitt durch Windungen der gewickelten Flammensperranordnung im Bereich des Außenumfangs mit einer zur Herstellung einer Bohrung eingeführten Funkenerosionselektrode.

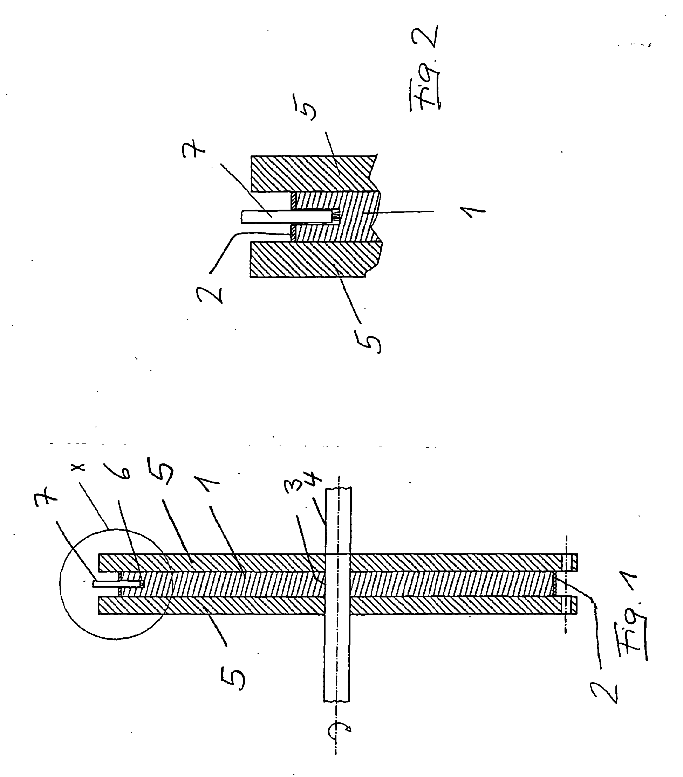

Figur 1 zeigt eine Anordnung einer gewickelten Flammensperranordnung 1, die eine flache Scheibe mit einem etwa kreisförmigen Außenumfang bildet und durch eine Abschluss-Umfangslage 2 nach radial außen abgeschlossen sein kann. Die Flammensperranordnung 1 weist ein zentrales axiales Durchgangsloch 3 auf, durch das eine Halteachse 4 hindurchgesteckt ist, sodass die Flammensperranordnung 1 auf der Halteachse 4 drehbar gelagert ist.

Für die Durchführung des erfindungsgemäßen Verfahrens ist die Flammensperranordnung 1 axial beidseitig mit jeweils einer Halteplatte 5 abgedichtet abgeschlossen.

Figur 1 zeigt, dass zum Einbringen einer radialen Bohrung 6 in die Flammensperranordnung 1 eine Funkenerosionselektrode 7 vom Außenumfang her in die Flammensperranordnung eingeführt wird. Die Funkenerosionselektrode 7 treibt durch Funkenerosion Löcher in die gewickelten Lagen der Flammensperranordnung und so im Ergebnis die Bohrung 6 radial zum Zentrum der scheibenförmigen Flammensperranordnung 1 voran.

Figur 2 verdeutlicht dies in einer vergrößerten Darstellung.

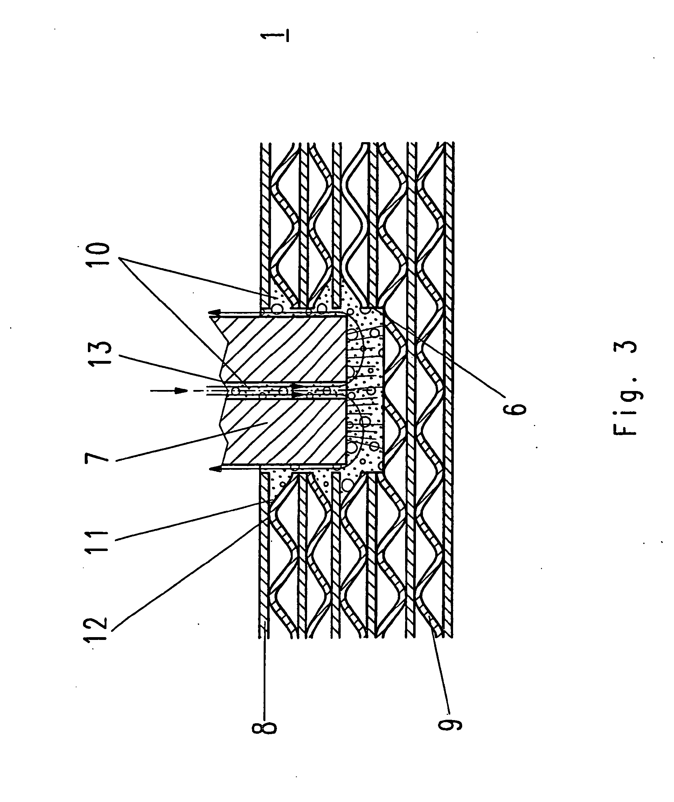

Figur 3 zeigt einen Hochschnitt durch die axiale Mittenebene der Flammensperranordnung 1, wodurch der Aufbau der Flammensperranordnung 1 aus abwechselnd angeordneten Windungen eines glatten ersten Metallbandes 8 und eines mit einer definierten Riffelung (Wellung) versehenen, ein zweites Metallband 9 bildenden Riffelband verdeutlicht wird. Ferner wird aus der Darstellung der Figur 3 deutlich, dass über eine zentrale Bohrung 13 der Funkenerosionselektrode 7 Kühlflüssigkeit 10 in die Bohrung eingeleitet wird. Die Flüssigkeit wird in axialer Richtung durch die abgedichtet angeordneten Halteplatten 5 an einem Abfließen gehindert, während in Umfangsrichtung die von der Bohrung betroffenen Spalte 11 zwischen dem ersten Metallband 8 und dem zweiten Metallband 9 mit Flüssigkeit 10 gefüllt werden. Dabei kann die Flüssigkeit jedoch nur bis zu Kontaktpunkten 12 zwischen dem ersten Metallband 8 und dem zweiten Metallband 9 vordringen und wird somit in einem abgegrenzten Raum im Bereich der Bohrung 6 gehalten. Dadurch wird sichergestellt, dass die Flüssigkeit in definierter Weise in die Bohrung 6 eingeführt wird und aus der Bohrung 6 am Außenumfang der Funkenerosionselektrode 7 wieder austritt und so die für das Funkenerosionsbohren benötigte Funktion der Kühlung und des Abtransports des erodierten Materials erfüllen kann.

Durch die erfindungsgemäßen Maßnahmen kann somit die Bohrung 6 in analoger Weise wie in massives Material eingebracht werden, obwohl die Flammensperranordnung die die Spalte 11 ausbildenden, axial offenen Zwischenräume aufweist.

Es zeigt sich, dass die durch Funkenerosion eingebrachte Bohrung 6 zu keinerlei Veränderungen der Form der Riffelung des zweiten Metallbandes 9 oder des glatten ersten Metallbandes 8 führt, sodass die definierten Querschnitte der Spalte 11 der Flammensperranordnung 1 unverändert auch im Bereich der Bohrung 6 erhalten bleiben.

In die fertig gestellten Bohrungen 6 werden dann passende Fixierstifte eingesetzt, sodass die Windungen der gewickelten Metallbänder 8, 9 nunmehr formschlüssig miteinander verbunden sind, sodass eine axiale Verschiebung der Windungen der Metallbänder 8, 9 nicht mehr möglich ist. Weitere Stabilisierungen der Flammensperranordnung 1 sind dann nicht mehr erforderlich.

## Patentansprüche

1. Verfahren zum Einbringen von radial ausgerichteten Bohrungen (6) für Fixierstifte in eine Flammensperranordnung (1), die aus zwei gemeinsam zu einer Scheibe mit einem etwa kreisförmigen Außenumfang gewickelten Metallbändern (8, 9) gebildet ist, von denen ein erstes Metallband (8) ein glattes Band und das zweite Metallband (9) ein eine definierte Riffelung aufweisendes Riffelband ist, wobei die beiden Bänder (8, 9) durch Aneinanderliegen definierte Spalte (11) für einen Fluiddurchtritt bilden, **dadurch gekennzeichnet, dass** die gewickelte Flammensperranordnung (1) beidseitig axial vollständig mit Halteplatten (5) abgeschlossen wird und dass vom Außenumfang radial nach innen mit einer Funkenerosionselektrode (7) unter Eindrücken einer Kühlflüssigkeit (10) die Bohrung eingebracht wird.

2. Flammensperranordnung, die aus zwei gemeinsam zu einer Scheibe mit einem etwa kreisförmigen Außenumfang gewickelten Metallbändern (8, 9) gebildet ist, von denen ein erstes Metallband (8) ein glattes Band und das zweite Metallband (9) ein eine definierte Riffelung aufweisendes Riffelband ist, wobei die beiden Bänder (8, 9) durch Aneinanderliegen definierte Spalte (11) für einen Fluiddurchtritt bilden und durch in radiale Bohrungen (6) eingesetzte Fixierstifte zueinander in Position gehalten werden, **dadurch gekennzeichnet, dass** die Bohrungen (6) durch Funkenerosion ohne Verformung der in das zweite Metallband eingeformten Riffelung eingebracht sind, sodass die Spalte (11) auch im Bereich der Bohrungen (6) in der durch die Riffelung definierten Weise vorhanden sind.

## Claims

1. A method of incorporating radially oriented bores (6) for fixing pins in a flame arrester arrangement (1) which is formed from two metal strips (8, 9) which are wound together to form a disk having an approximately circular outer circumference and of which a first metal strip (8) is a smooth strip and the second metal strip (9) is a fluted strip having defined fluting, the two strips (8, 9), by bearing against one another, forming defined gaps (11) for passage of a fluid, wherein the wound flame arrester arrangement (1) is completely closed off axially on both sides by retaining plates (5), and wherein the bore is incorporated radially inward from the outer circumference by a spark erosion electrode (7) while injecting a cooling liquid (10).

2. A flame arrester arrangement which is formed from two metal strips (8, 9) which are wound together to form a disk having an approximately circular outer circumference and of which a first metal strip (8) is a smooth strip and the second metal strip (9) is a fluted strip having defined fluting, the two strips (8, 9), by bearing against one another, forming defined gaps (11) for passage of a fluid and being held in position relative to one another by fixing pins inserted into radial bores (6), wherein the bores (6) are incorporated by spark erosion without deforming the fluting formed in the second metal strip, such that the gaps (11) are also present in the region of the bores (6) in the manner defined by the fluting.

## Revendications

1. Procédé pour réaliser des trous (6) orientés radialement, pour des goujons d'assemblage dans un piège à flammes (1) qui est formé de deux bandes métalliques (8 ; 9) enroulées ensemble en un disque avec un périmètre extérieur environ circulaire, parmi lesquelles une première bande métallique (8) est une bande lisse et la deuxième bande métallique (9) est une bande cannelée présentant une cannelure définie, les deux bandes (8, 9) formant par leur agencement adjacent, des fentes (11) définies pour un passage de fluide, **caractérisé en ce que** l'on ferme entièrement axialement des deux côtés, par des plaques de maintien (5), le piège à flammes (1) enroulé, et **en ce que** l'on réalise le perçage depuis le périmètre extérieur radialement vers l'intérieur à l'aide d'une électrode d'érosion par étincelles (7) avec enfoncement d'un liquide de refroidissement (10).

2. Piège à flammes formé de deux bandes métalliques (8 ; 9) enroulées ensemble en un disque avec un périmètre extérieur environ circulaire, parmi lesquelles une première bande métallique (8) est une bande lisse et la deuxième bande métallique (9) est une bande cannelée présentant une cannelure définie, les deux bandes (8, 9) formant par leur agencement adjacent, des fentes (11) définies pour un passage de fluide, et étant maintenues en position l'une par rapport à l'autre par des goujons d'assemblage introduits dans des trous (6) radiaux, **caractérisé en ce que** les trous (6) sont réalisés par érosion par étincelles sans déformation de la cannelure modelée dans la deuxième bande métallique, de sorte que les fentes (11) existent aussi dans la zone des trous (6) de la façon définie par la cannelure.
